# EUROPEAN PATENT APPLICATION

(11) **EP 4 787 683 A1**
(43) Date of publication of application: **05.08.2026**
(21) Application number: 24891518.3
(22) Date of filing: 15.11.2024
(51) Int. Cl.: H02K 15/02, B21D 28/02, H01F 41/02, H02K 15/121

(54) **MANUFACTURING DEVICE AND MANUFACTURING METHOD FOR LAMINATED IRON CORE**

(30) Priority: 16.11.2023 JP 2023195391
(71) Applicant: Nippon Steel Corporation, Tokyo 100-8071 (JP)
(72) Inventor: TAKEDA, Kazutoshi, Tokyo 100-8071 (JP); FUKUCHI, Minako, Tokyo 100-8071 (JP); KATAOKA, Takashi, Tokyo 100-8071 (JP)
(74) Representative: Vossius & Partner Patentanwälte Rechtsanwälte mbB
(86) International application number: PCT/JP2024/040685
(87) International publication number: WO 2025/105483

(57) **Abstract**

Provided are a manufacturing device for a laminated core and a manufacturing method for a laminated core that facilitate the assembly of the adhesive applicator and reduce the time required for maintenance. The manufacturing device 1 for a laminated core 4 according to the present invention includes: an adhesive applicator 6 that applies an adhesive to portions of a steel sheet 2 corresponding to core sheets 3; a reciprocating drive portion 7 that switches whether or not to the adhesive is applied by the adhesive applicator 6; and a buffer member 8 that allows displacement of the adhesive applicator 6 in a reciprocating direction, wherein the adhesive applicator 6 has a discharge portion 60 that discharges the adhesive from a tip of a passage 60a, and when the application of the adhesive is performed, the adhesive applicator 6 is disposed such that the adhesive discharged from the tip of the discharge portion 60 is brought into contact with the steel sheet in response to an up and down movement of the steel sheet 2 accompanying the forming of the core sheets 3 by punching from the steel sheet 2, and the buffer member 8 is configured to adjust a contact pressure of the tip against the steel sheet 2.

## Description

### [Technical Field]

The present invention relates to a manufacturing device for a laminated core and a manufacturing method for the same, in which core sheets having a predetermined shape are punched out from a steel sheet and a laminated core is manufactured by laminating and bonding a predetermined number of the core sheets.

### [Background Art]

Laminated cores in which a predetermined number of core sheets are laminated are used as cores in rotating electrical machines. The core sheets are joined together by various methods. When caulking or welding is used as the joining method, the magnetic characteristics of the laminated core may be deteriorated due to mechanical or thermal stress during joining, as well as interlayer short circuits, resulting in the laminated core failing to achieve its full performance. For this reason, as shown in Patent Literature 1 below and the like, laminating and bonding of core sheets has been explored.

Patent Literature 1 describes a manufacturing device for a laminated core including: an upper die and a lower die; a progressive die means for sequentially punching core sheets from a strip-shaped thin steel sheet fed intermittently; and an adhesive application means provided within the lower die for applying an adhesive to portions of the strip-shaped thin steel sheet corresponding to the core sheets. The adhesive application means includes an adhesive discharge portion including a nozzle block with a plurality of discharge holes opened on its upper surface, and an adhesive feed portion that discharges the adhesive from the plurality of discharge holes by feeding the adhesive to the adhesive discharge portion at a predetermined pressure. The adhesive application means further includes a reciprocating drive portion that moves the adhesive discharge portion forward and backward relative to the adhesive application surface of the strip-shaped thin steel sheet. By moving the adhesive discharge portion forward and backward via the reciprocating drive portion, the execution of the adhesive application process by the adhesive discharge portion is switched on or off. At the position of the core sheet to which no adhesive has been applied, a laminated core consisting of a predetermined number of core sheets is separated from the group of core sheets.

### [Citation List]

### [Patent Literature]

[Patent Literature 1] Japanese Patent Application Publication No. 2017-216873 A

### [Summary of Invention]

### [Technical Problem]

In the conventional device described in Patent Literature 1 described above, the execution of the adhesive application process is switched on or off by the reciprocating movement of the adhesive discharge portion. For this reason, it is necessary to strictly control the dimensional accuracy of the position of the adhesive discharge portion relative to the strip-shaped thin steel sheet, and the positions between the components of the metal formed product. Generally, metal formed products capable of achieving high dimensional accuracy are used as components of the adhesive discharge portion.

On the other hand, when performing maintenance on the manufacturing device, it is necessary to disassemble such an adhesive discharge portion and reassemble it onto the die of the manufacturing device. As described above, in the conventional device, the dimensional accuracy must be strictly controlled, and the time required for maintenance increases due to the need for precise reassembly of the adhesive discharge portion.

The present invention has been made to solve the above problems, and one of objectives of the present invention is to provide a manufacturing device for a laminated core and a manufacturing method for a laminated core that facilitate the assembly of the adhesive application means and reduce the time required for maintenance.

### [Solution to Problem]

In one embodiment, the manufacturing device for a laminated core according to the present invention is a manufacturing device for a laminated core in which core sheets having a predetermined shape are formed by punching from a steel sheet and a predetermined number of core sheets are laminated and bonded, the manufacturing device comprising: an adhesive applicator that applies an adhesive to portions of the steel sheet corresponding to the core sheets; a reciprocating drive portion that reciprocates the adhesive applicator relative to the steel sheet to switch whether or not the adhesive is applied by the adhesive applicator; and a buffer member that allows displacement of the adhesive applicator in a reciprocating movement, wherein the adhesive applicator comprises a passage through which the adhesive passes and has a discharge portion that discharges the adhesive from a tip of the passage, and when the application of the adhesive is performed, the adhesive applicator is disposed such that the adhesive discharged from the tip of the discharge portion is brought into contact with the steel sheet in response to an up and down movement of the steel sheet accompanying the forming of the core sheets by punching from the steel sheet, and the buffer member is configured to adjust a contact pressure of the tip against the steel sheet.

Also, in one embodiment, the manufacturing method for a laminated core according to the present invention includes manufacturing a laminated core using the above manufacturing device for a laminated core.

### [Advantageous Effects of Invention]

According to one embodiment of the manufacturing device for a laminated core and the manufacturing method for a laminated core of the present invention, when the application of the adhesive is performed, the adhesive applicator is disposed such that the adhesive discharged from the tip of the discharge portion is brought into contact with the steel sheet in response to the up and down movement of the steel sheet accompanying the forming of the core sheets by punching from the steel sheet, and the buffer member is configured to adjust the contact pressure of the tip against the steel sheet, and therefore, even if a misalignment occurs in the upper or lower position and the like of the adhesive applicator relative to the steel sheet, the buffer member can absorb the misalignment, making it easier to assemble the adhesive applicator and reducing the time required for maintenance.

### [Brief Description of Drawings]

[Fig. 1] Fig. 1 is an explanatory view showing a manufacturing device for a laminated core according to Embodiment 1 of the present invention.
[Fig. 2] Fig. 2 is an explanatory view showing an enlarged view of the adhesive applicator and its surroundings of Fig. 1.
[Fig. 3] Fig. 3 is an explanatory view showing main parts of a manufacturing device for a laminated core according to Embodiment 2 of the present invention.
[Fig. 4] Fig. 4 is an explanatory view showing main parts of a manufacturing device for a laminated core according to Embodiment 3 of the present invention.
[Fig. 5] Fig. 5 is an explanatory view showing main parts of a manufacturing device for a laminated core according to Embodiment 4 of the present invention.
[Fig. 6] Fig. 6 is an explanatory view showing main parts of a manufacturing device for a laminated core according to Embodiment 5 of the present invention.

### [Description of Embodiments]

Hereinafter, embodiments of the invention will be specifically described with reference to the drawings. The invention is not limited to each embodiment, and components can be modified and embodied without departing from the spirit of the invention. Further, various inventions can be formed by appropriately combining a plurality of components disclosed in each embodiment. For example, some components may be removed from all of the components shown in the embodiments. Furthermore, the components of different embodiments may be optionally combined.

### Embodiment 1.

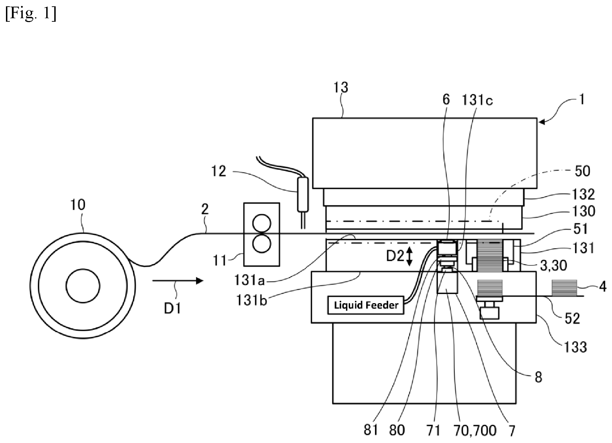

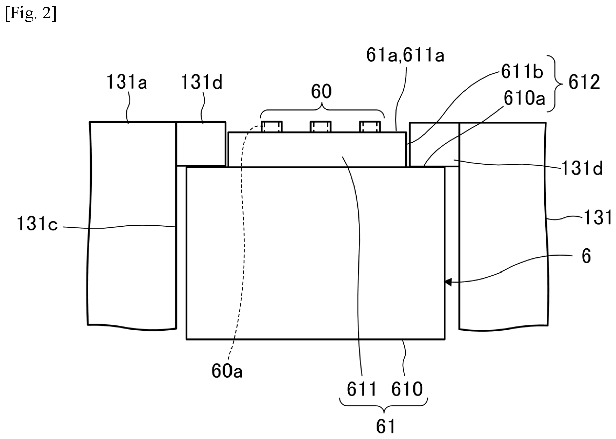

Fig. 1 is an explanatory view showing a manufacturing device 1 for a laminated core 4 according to Embodiment 1 of the present invention, and Fig. 2 is an explanatory view showing an enlarged view of an adhesive applicator 6 and its surroundings of Fig. 1. The manufacturing device 1 is a manufacturing device for a laminated core 4 in which core sheets 3 having a predetermined shape are formed by punching from a steel sheet 2 and a predetermined number of the core sheets 3 is laminated and bonded.

As shown in Fig. 1, the manufacturing device 1 according to this embodiment may include a reel 10, a feeder 11, an oil applicator 12, and press equipment 13. The reel 10 is provided with a coil of the steel sheet 2. The steel sheet 2 drawn from the reel 10 is fed through the feeder 11 to the press equipment 13. The oil applicator 12 is disposed between the feeder 11 and the press equipment 13, and feeds a pressing oil to the surface of the steel sheet 2 before it is introduced into the press equipment 13. The press equipment 13 includes an upper die 130 and a lower die 131, and the core sheet 3 is punched out from the steel sheet 2 by the upper die 130 and the lower die 131. The upper die 130 is mounted on the mounting base 132, and the lower die 131 is mounted on the bolster 133.

The manufacturing device 1 may include a punching portion 50, a laminating portion 51, and a conveyor 52.

The punching portion 50 is a portion for punching the core sheet 3 from the steel sheet 2. The punching portion 50 may be formed by the upper die 130 and the lower die 131. The punching of the steel sheet 2 by the punching portion 50 may be performed in multiple stages. That is, the steel sheet 2 may be sequentially punched in a feed direction D1 of the steel sheet 2 toward the final core sheet 3. The punching of the steel sheet 2 by the punching portion 50 may include a pre-processing step, performed in one or more stages, to punch out portions of the steel sheet 2 other than the outer shape or outer periphery of the core sheet 3, and an outer shape punching step, performed after the pre-processing, to punch out the outer shape of the core sheet 3 from the steel sheet 2. The outer shape punching is performed last, and the core sheet 3 is punched out from the steel sheet 2 when the outer shape of the core sheet 3 is punched out.

The steel sheet 2 is fed while being positioned between the upper die 130 and the lower die 131. When the steel sheet 2 is punched by the punching portion 50, the steel sheet 2 is lowered and placed on the upper face of the lower die 131, and the upper die 130 is pressed downward to punch through the steel sheet 2. Subsequently, the steel sheet 2 is returned to a position between the upper die 130 and the lower die 131, and the steel sheet 2 is fed to a downstream side, so that punching of the steel sheet 2 is performed at the next position. In other words, in the manufacturing device 1 according to this embodiment, the steel sheet 2 is moved up and down accompanying the forming of the core sheets 3 by punching from the steel sheet 2.

The laminating portion 51 is a portion for laminating and bonding the core sheets 3 to which the adhesive has been applied to form the group of core sheets 30. The laminating portion 51 may be incorporated into the lower die 131 at the position where the outer shape punching is performed by the punching portion 50. The group of core sheets 30 consists of a plurality of core sheets 3 laminated and bonded together. The core sheet 3 is dropped onto the group of core sheets 30 formed by previously punched core sheets 3, and is closely pressed against and bonded to the upper surface of the group of core sheets 30 by the weight of the core sheet 3 itself or subsequent core sheets 3, and by the pressure applied by the upper die 130. The upper die 130 may be provided with a protrusion that presses the core sheet 3 on the top of the group of core sheets 30 downward by an amount equal to the thickness of a single core sheet 3 to apply pressure.

As described below, the adhesive is not applied to one of the plurality of core sheets 3. The group of core sheets 30 is configured to be separable at the core sheet 3 to which no adhesive is applied. When the core sheet 3 to which no adhesive is applied is referred to as a first core sheet, and the core sheet 3 to which the adhesive is applied is referred to as a second core sheet, the laminated core 4 includes one first core sheet and a plurality of second core sheets laminated and bonded above or below the first core sheet.

The conveyor 52 is a device for conveying the laminated core 4 separated from the group of core sheets 30. The laminated core 4 may be removed from the lower die 131 and a bolster 133 by the conveyor 52.

The manufacturing device 1 according to this embodiment includes an adhesive applicator 6, a reciprocating drive portion 7, and a buffer member 8.

The adhesive applicator 6 is for applying the adhesive to portions of the steel sheet 2 corresponding to the core sheets 3. The adhesive applicator 6 may be incorporated into the upper die 130 or the lower die 131, and may apply the adhesive to the surface of the steel sheet 2. In the illustrated embodiment, the adhesive applicator 6 is incorporated into the lower die 131 and applies the adhesive to the lower face of the steel sheet 2. The application of the adhesive may be performed before the core sheet 3 is finally punched out from the steel sheet 2, i.e., during pre-processing or prior to the outer shape punching.

The reciprocating drive portion 7 is a portion for reciprocating the adhesive applicator 6 relative to the steel sheet 2 to switch whether or not the adhesive is applied by the adhesive applicator 6. The reciprocating drive portion 7 can reciprocate the adhesive applicator 6 so that the adhesive is not applied to one of the plurality of core sheets 3, depending on the number of core sheets 3 to be included in the laminated core 4.

The reciprocating drive portion 7 is capable of moving the adhesive applicator 6 up and down. When the adhesive applicator 6 is positioned below the steel sheet 2, as shown in the illustrated embodiment, the application of the adhesive is enabled when the adhesive applicator 6 is raised, and the application of the adhesive is not performed when the adhesive applicator 6 is lowered.

The buffer member 8 is a member for allowing displacement of the adhesive applicator 6 in a reciprocating direction D2. The buffer member 8 allows displacement of the adhesive applicator 6 in the up and down direction.

Here, as particularly shown in Fig. 2, the adhesive applicator 6 according to this embodiment is provided with a discharge portion 60 to which a passage 60a through which the adhesive passes is provided and which is configured to discharge the adhesive from a tip of the passage 60a. In the illustrated embodiment, the discharge portion 60 is composed of a plurality of nozzles arranged at a distance from one another.

In the manufacturing device 1 according to this embodiment, the adhesive applicator 6 is disposed such that, when the application of the adhesive is performed, the adhesive discharged from the tip of the discharge portion 60 is brought into contact with the steel sheet 2 in response to the up and down movement of the steel sheet 2 accompanying the forming of the core sheets 3 by punching from the steel sheet 2, and the buffer member 8 is configured to adjust the contact pressure of the tip against the steel sheet 2.

If the buffer member 8 is not provided, it is preferable to mount the adhesive applicator 6 on the die of the manufacturing device 1 such that the steel sheet 2 is brought into contact with only the adhesive discharged from the tip of the discharge portion 60 with extremely high precision. This is because if the steel sheet 2 is repeatedly pressed firmly against the tip of the discharge portion 60, an excessive adhesive may adhere to the steel sheet 2, or the discharge portion 60 may be damaged. When performing maintenance on the manufacturing device 1, it is necessary to disassemble the adhesive applicator 6 and reassemble it onto the die of the manufacturing device 1. Furthermore, if the tip of the discharge portion 60 is not slightly contacted with the steel sheet at a position lower than the steel sheet 2, an amount of the adhesive adhering to the steel sheet 2 may vary depending on the properties of the adhesive, potentially resulting in inconsistent bonding. In this way, when the buffer member 8 is not provided, the adhesive applicator 6 must be strictly assembled, which will increase the time required for maintenance. However, in the manufacturing device 1 according to this embodiment, the contact pressure of the tip against the steel sheet 2 is adjusted by the buffer member 8; therefore, even if a misalignment occurs in the up and down position of the adhesive applicator 6 relative to the steel sheet 2, the buffer member 8 can absorb the misalignment. This makes it easier to assemble the adhesive applicator 6 and reduces the time required for maintenance. The adhesive applicator 6 according to this embodiment may be disposed such that the tip of the discharge portion 60 is brought into contact with the steel sheet 2 in response to the up-and-down movement of the steel sheet 2 accompanying the forming of the core sheets 3 by punching from the steel sheet 2.

When the adhesive is discharged from the tip of the discharge portion 60 and applied to the steel sheet 2, the steel sheet 2 moves up and down as it is pressed by the upper die. Therefore, if the steel sheet 2 descends excessively, the discharge portion 60 is pushed downward. The function of the buffer member 8 is to displace the discharge portion 60 downward in response to the downward pressure from the steel sheet 2. If the steel sheet 2 is brought into contact with the discharge portion 60 with excessive contact pressure, this can cause problems such as wear or damage to the discharge portion 60, or prevent the application of the proper amount of the adhesive. Therefore, by allowing the discharge portion 60 to displace elastically via the buffer member 8, the above problems are prevented, and the application of the proper amount of the adhesive is ensured. That is, by appropriately selecting the elasticity of the buffer member 8, the contact pressure between the steel sheet 2 and the discharge portion 60 is adjusted. Since the contact pressure is also affected by the viscosity of the adhesive, it is preferable to adjust it according to the type of adhesive and the area to be coated. Furthermore, it is preferable for the buffer member 8 to have a configuration that allows the discharge portion 60 to move up and down rapidly. Examples of the buffer member 8 that can be used herein include a spring, an air cylinder, or a rubber cushioning material.

As particularly shown in Fig. 2, the adhesive applicator 6 further includes a holding portion 61 that holds the discharge portion 60, and the discharge portion 60 may be provided so as to protrude from an end face 61a of the holding portion 61.

The holding portion 61 may include a large-diameter portion 610 and a small-diameter portion 611 projecting from the end face of the large-diameter portion 610. The outer diameter of the small-diameter portion 611 is smaller than the outer diameter of the large-diameter portion 610. The large-diameter portion 610 and the small-diameter portion 611 may be arranged coaxially with respect to each other. A plurality of nozzles (discharge portions 60) may be provided so as to protrude from the end face 611a of the small-diameter portion 611. If a plurality of nozzles were provided individually, the buffer member 8 might be required for each nozzle. In contrast, by having a plurality of nozzles serving as discharge portions 60 held in the holding portion 61 as in this embodiment, the buffer members 8 can be consolidated into a single unit, thereby simplifying the structure. A step portion 612 is formed by the end face 610a of the large-diameter portion 610 and the circumferential surface 611b of the small-diameter portion 611. The step portion 612 may be provided over the entire circumferential extent of the large-diameter portion 610 and the small-diameter portion 611.

As particularly shown in Fig. 1, the adhesive applicator 6 is housed in a through hole 131c that penetrates between the inner surface 131a and the outer surface 131b of the lower die 131. The inner surface 131a and the outer surface 131b may be surfaces of the lower die 131 spaced apart in the up and down direction. The inner surface 131a is the surface facing the steel sheet 2, and the outer surface 131b may be the surface placed on the bolster 133.

As particularly shown in Fig. 2, the end of the through hole 131c on the inner surface 131a side is provided with at least one positioning protrusion 131d that protrudes inward in the radial direction of the through hole 131c, and the position (i.e., height position) of the adhesive applicator 6 on the inner surface 131a side can be determined by the positioning protrusion 131d. Positioning by the positioning protrusion 131d may be performed by having the positioning protrusion 131d abut against the step portion 612 of the holding portion 61 due to the biasing of the buffer member 8, thereby restricting the movement of the adhesive applicator 6 toward the inner surface 131a side (upward). One or more positioning protrusions 131d may be provided over the circumference as a whole or partially in the circumferential direction of the through hole 131c. A plurality of positioning protrusions 131d may be provided at intervals in the circumferential direction of the through hole 131c. At the upper limit position of the adhesive applicator 6 where the positioning protrusion 131d abuts against the adhesive applicator 6 or its step portion 612, a compression allowance remains in the buffer member 8, allowing the adhesive applicator 6 to move downward when it receives an input from above. At the upper limit position of the adhesive applicator 6, it is preferable that the tip of the discharge portion 60 be positioned at the same height as the inner surface 131a of the lower die 131.

As shown in Fig. 1, in this embodiment, the reciprocating drive portion 7 is configured as a hydraulic cylinder having a fixed body 70 and a rod 71 provided to be reciprocable relative to the fixed body 70. The fixed body 70 includes a cylinder body 700. The fixed body 70 or the cylinder body 700 may be positioned at least partially outside the through hole 131c. In the illustrated embodiment, the cylinder body 700 is disposed on an outer side of the outer surface 131b of the lower die 131, and the rod 71 is inserted through the through hole 131c and connected to the adhesive applicator 6. The rod 71 is indirectly connected to the adhesive applicator 6 via the buffer member 8. However, the cylinder body 700 may be disposed inside the lower die 131.

The buffer member 8 is disposed between the adhesive applicator 6 and the reciprocating drive portion 7. More specifically, the buffer member 8 is disposed between the rod 71 and the adhesive applicator 6. The buffer member 8 may be fixed to the upper end of the rod 71. A mounting table 80 is fixed to the upper portion of the buffer member 8. A pressure sensor 81 is mounted on the mounting table 80, and the adhesive applicator 6 is placed on the pressure sensor 81. The reciprocating drive portion 7 can control the reciprocating movement of the adhesive applicator 6 based on the pressure detected by the pressure sensor 81. In this embodiment, the detected pressure corresponds to the pressure of the step portion 612 abutting against the positioning protrusion 131d. The reciprocating drive portion 7 can raise the rod 71 until the detected pressure reaches a predetermined value.

### Embodiment 2.

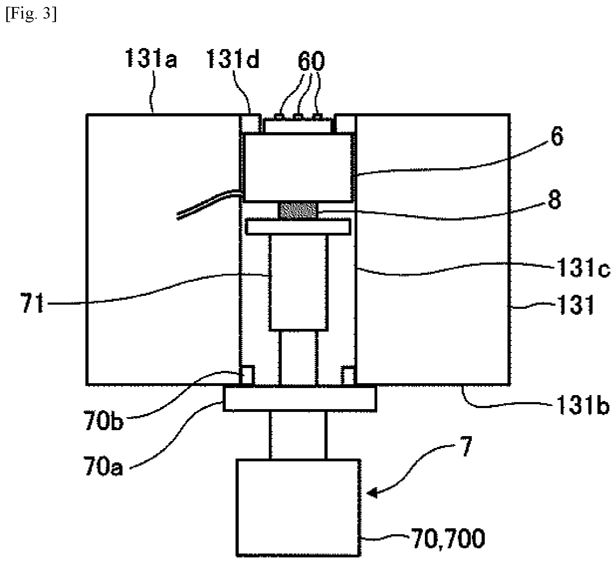

Fig. 3 is an explanatory view showing the main parts of the manufacturing device 1 for a laminated core according to Embodiment 2 of the present invention. Embodiment 1 has described the mounting table 80 being interposed between the adhesive applicator 6 and the buffer member 8. However, as shown in Fig. 3, the adhesive applicator 6 may be directly placed on the buffer member 8.

As particularly shown in Fig. 3, when the cylinder body 700 is disposed on an outer side of the outer surface 131b of the lower die 131, the cylinder body 700 may be fixed to the outer surface 131b of the lower die 131. The cylinder body 700 has a flange portion 70a having a disc shape. The outer diameter of the flange portion 70a is larger than the inner diameter of the through hole 131c. By fixing the flange portion 70a to the outer surface 131b of the lower die 131 around the through hole 131c, the cylinder body 700 can be fixed to the outer surface 131b of the lower die 131. The flange portion 70a can be fixed to the outer surface 131b of the lower die 131 using fastening members such as bolts. At least one projection 70b protrudes from the end face of the flange portion 70a. The position of the reciprocating drive portion 7 is determined by the projection 70b following the inner circumferential surface of the through hole 131c. The rod 71 is connected to the adhesive applicator 6 via the buffer member 8. Other configurations are the same as those of Embodiment 1.

### Embodiment 3.

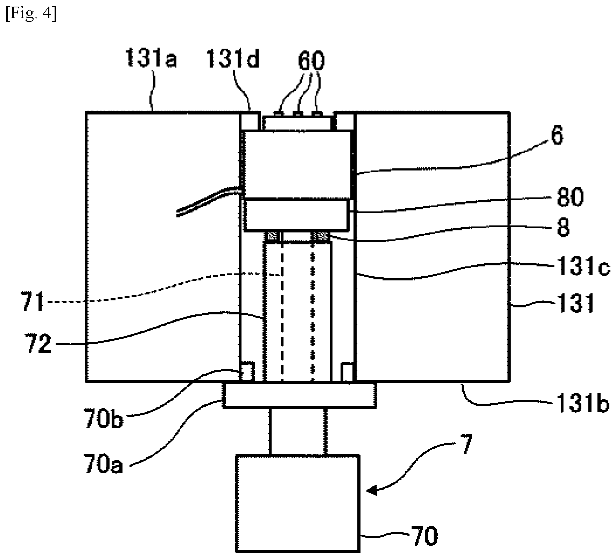

Fig. 4 is an explanatory view showing main parts of the manufacturing device 1 for the laminated core 4 according to Embodiment 3 of the present invention. As shown in Fig. 4, the mounting table 80 may be fixed to the upper end of the rod 71, and the adhesive applicator 6 may be placed on the mounting table 80. The fixed body 70 includes a support tube 72 for supporting the rod 71. The support tube 72 may be disposed on the flange portion 70a of the cylinder body 700. The rod 71 is passed through the interior of the support tube 72. That is, the mounting table 80 and the rod 71 are configured to be displaceable relative to the support tube 72. The buffer member 8 may be disposed between the support tube 72 and the adhesive applicator 6, more specifically, between the upper face of the support tube 72 and the lower face of the mounting table 80. The buffer member 8 may be disposed around the outer circumference of the rod 71. Other configurations are the same as those of Embodiments 1, 2.

### Embodiment 4.

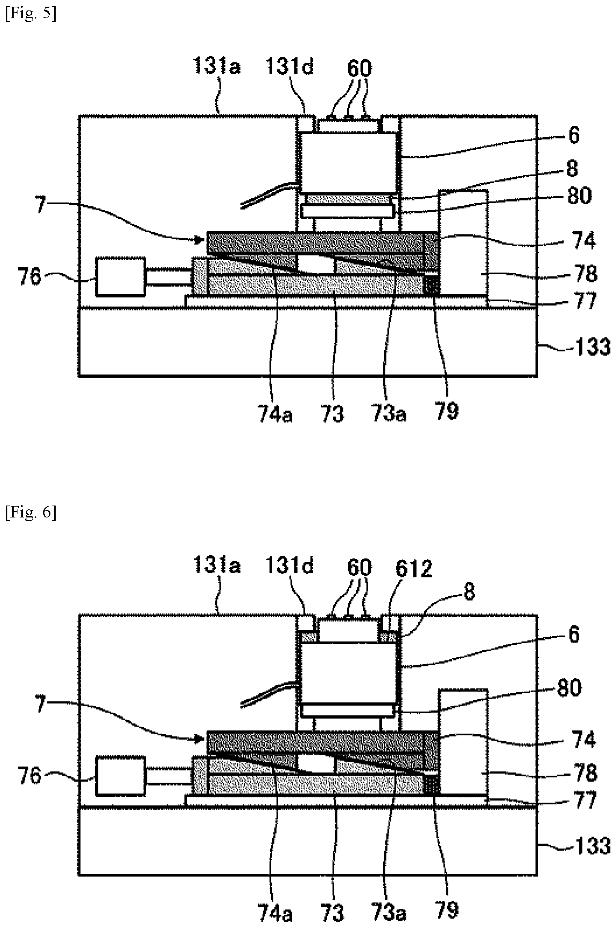

Fig. 5 is an explanatory view showing main parts of the manufacturing device 1 for the laminated core 4 according to Embodiment 4 of the present invention. In Embodiments 1 to 3, the reciprocating drive portion 7 has been described as a hydraulic cylinder. However, the adhesive applicator 6 may be reciprocated by any other configuration.

In the embodiment shown in Fig. 5, the reciprocating drive portion 7 is configured as a slide cam mechanism including a first cam member 73 provided to be slidable in a horizontal direction, and a second cam member 74 driven in an up and down direction in response to the sliding of the first cam member 73. The first cam member 73 and the second cam member 74 may be disposed inside the lower die 131. For example, the first cam member 73 and the second cam member 74 may be housed in a recess formed on the lower face of the lower die 131. Furthermore, the first cam member 73 and the second cam member 74 may be placed on the upper face of the bolster 133.

The second cam member 74 may be connected to the adhesive applicator 6. The mounting table 80 may be fixed to the upper face of the second cam member 74, and the adhesive applicator 6 may be placed on the mounting table 80 via the buffer member 8.

The first cam member 73 and the second cam member 74 may have inclined surfaces 73a, 74a, respectively, at positions adjacent to each other, and the inclined surfaces 73a, 74a may convert the horizontal displacement of the first cam member 73 into up and down displacement of the second cam member 74. In the illustrated embodiment, when the first cam member 73 is slid to the right in the figure by the drive means 76, the second cam member 74 is slid upward in the figure, bringing the adhesive applicator 6 closer to the steel sheet 2. The lower die 131 or the bolster 133 may be provided with a first guide rail 77 for guiding the horizontal sliding of the first cam member 73. Furthermore, the lower die 131 or the bolster 133 may be provided with a second guide rail 78 for guiding the up and down displacement of the second cam member 74.

A biasing member 79 may be connected to one end of the first cam member 73, and when the pressure applied to the first cam member 73 by the drive means 76 is released, the first cam member 73 may slide in the horizontal direction due to the biasing force of the biasing member 79. In the illustrated embodiment, when the first cam member 73 is slid to the right in the figure by the drive means 76, the biasing member 79 is compressed to release the pressure applied to the first cam member 73 by the drive means 76, the first cam member 73 is slid to the left in the figure due to the restoring force of the biasing member 79. The biasing member 79 may be disposed at any position, but may be disposed between one end of the first cam member 73 and the second guide rail 78, as shown in the illustrated embodiment. Other configurations are the same as those of Embodiments 1 to 3.

### Embodiment 5.

Fig. 6 is an explanatory view showing main parts of the manufacturing device 1 for the laminated core 4 according to Embodiment 5 of the present invention. Embodiments 1 to 4 have described the buffer member 8 being disposed between the adhesive applicator 6 and the reciprocating drive portion 7, and the like. However, as shown in Fig. 6, the buffer member 8 may be disposed between the adhesive applicator 6 and the positioning protrusion 131d. The buffer member 8 may be disposed on the step portion 612 of the adhesive applicator 6. Although Fig. 6 shows the reciprocating drive portion 7 as a slide cam mechanism, the same applies even if the reciprocating drive portion 7 is a hydraulic cylinder. Other configurations are the same as those of Embodiments 1 to 4.

It should be noted that in Embodiments 1 to 5, the adhesive applicator 6 has been described as being housed in the through hole 131c of the lower die 131. However, the adhesive applicator 6 may also be housed in a through hole that penetrates between the inner surface and the outer surface of the upper die 130.

Furthermore, the reciprocating drive portion 7 may be disposed to reciprocate the adhesive applicator 6 housed in the through hole of the upper die 130. In this case, the cylinder body 700 of the reciprocating drive portion 7 (Embodiments 1 to 3) or the first cam member 73 and the second cam member 74 (Embodiments 4 and 5) may be disposed on an outer side of the outer surface of the upper die 130.

The manufacturing method for a laminated core according to an embodiment of the present invention includes manufacturing the laminated core 4 using the manufacturing device 1 for a laminated core 4 described above. The manufacturing method for the laminated core 4 according to an embodiment of the present invention includes: a step of applying an adhesive to portions of a steel sheet 2 corresponding to core sheets 3 using an adhesive applicator 6; and a step of reciprocating the adhesive applicator 6 relative to the steel sheet 2 using a reciprocating drive portion 7 to switch whether or not to apply the adhesive by the adhesive applicator 6, wherein displacement of the adhesive applicator 6 in a reciprocating direction D2 is allowed by the buffer member 8, the adhesive applicator 6 is provided with a passage 60a through which the adhesive passes and has a discharge portion 60 configured to discharge the adhesive from a tip of the passage 60a, and when the application of the adhesive is performed, the adhesive applicator 6 is disposed such that the adhesive discharged from the tip of the discharge portion 60 in response to an up and down movement of the steel sheet 2 accompanying the forming of the core sheets 3 by punching from the steel sheet 2 is brought into contact with the steel sheet 2, and is configured such that a contact pressure of the tip of the discharge portion 60 against the steel sheet 2 is adjusted by the buffer member 8.

While the preferred embodiments of the invention have been described above in detail with reference to the drawings, the present invention is not limited to such embodiments. It is obvious that a person skilled in the art to which this invention belongs can arrive at various variations or modifications in the scope of the technical idea recited in the claims, and it is understood that they also belong to the technical scope of this invention.

The inventions disclosed in this specification can also be described as follows.
[1] A manufacturing device for a laminated core in which core sheets having a predetermined shape are formed by punching from a steel sheet and a predetermined number of core sheets are laminated and bonded, the manufacturing device comprises:
   an adhesive applicator that applies an adhesive to portions of the steel sheet corresponding to the core sheets;
   a reciprocating drive portion that reciprocates the adhesive applicator relative to the steel sheet to switch whether or not the adhesive is applied by the adhesive applicator; and
   a buffer member that allows displacement of the adhesive applicator in the reciprocating direction,
   wherein:
      the adhesive applicator comprises a discharge portion to which a passage through which the adhesive passes is provided and which is configured to discharge the adhesive from a tip of the passage,
      when the application of the adhesive is performed, the adhesive applicator is disposed such that the adhesive discharged from a tip of the discharge portion is brought into contact with the steel sheet in response to an up and down movement of the steel sheet accompanying the forming of the core sheets by punching from the steel sheet,
      and wherein:
         the buffer member is configured to adjust a contact pressure of the tip against the steel sheet, or
         the adhesive applicator further comprises a holding portion that holds the discharge portion, and the discharge portion is provided so as to protrude from an end face of the holding portion.
[2] The manufacturing device for a laminated core according to [1], wherein the adhesive applicator further comprises a holding portion that holds the discharge portion, and the discharge portion is provided so as to protrude from an end face of the holding portion.
[3] The manufacturing device for a laminated core according to [1] or [2], further comprising a punching portion that punches out the core sheets from the steel sheet, the punching portion comprising a die comprising an upper die and a lower die,
   wherein the adhesive applicator is housed in a through hole penetrating between an inner surface and an outer surface of the upper die or the lower die, the inner surface and the outer surface being surfaces of the upper die or the lower die spaced apart in an up and down direction, the inner surface being a surface facing the steel sheet, and
   wherein an end of the through hole on the inner surface side comprises at least one positioning protrusion protruding inward in a radial direction of the through hole, and a position of the adhesive applicator on the inner surface side is determined by the positioning protrusion.
[4] The manufacturing device for a laminated core according to [3], wherein the buffer member is disposed between the adhesive applicator and the positioning protrusion.
[5] The manufacturing device for a laminated core according to any one of [1] to [4], wherein the reciprocating drive portion is a hydraulic cylinder comprising a fixed body and a rod provided so as to be reciprocable relative to the fixed body.
[6] The manufacturing device for a laminated core according to [5], wherein the buffer member is disposed between the rod and the adhesive applicator, or between a mounting table fixed to the rod and the fixed body.
[7] The manufacturing device for a laminated core according to any one of [1] to [4], wherein the reciprocating drive portion is a slide cam mechanism comprising a first cam member provided so as to be slidable in a horizontal direction and a second cam member driven in an up and down direction in response to the sliding of the first cam member.
[8] The manufacturing device for a laminated core according to [7], wherein the buffer member is disposed between the second cam member and the adhesive applicator.
[9] The manufacturing device for a laminated core according to [7] or [8], further comprising a punching portion that punches out the core sheets from the steel sheet, the punching portion comprising a die consisting of an upper die and a lower die,
   wherein the first cam member and the second cam member are disposed within the upper die or the lower die.
[10] A manufacturing method for a laminated core, the method comprising manufacturing the laminated core using the manufacturing device according to any one of [1] to [9].

### [Description of Reference Numerals]

1: manufacturing device
2: steel sheet
3: core sheet
4: laminated core
6: adhesive applicator
60: discharge portion
60a: passage
61: holding portion
61a: end face
611a: end face
7: reciprocating drive portion
70: fixed body
71: rod
73: first cam member
74: second cam member
8: buffer member
50: punching portion
130: upper die
131: lower die
131a: inner surface
131b: outer surface
131c: through hole

## Claims

1. A manufacturing device for a laminated core in which core sheets having a predetermined shape are formed by punching from a steel sheet and a predetermined number of core sheets are laminated and bonded, the manufacturing device comprises:
an adhesive applicator that applies an adhesive to portions of the steel sheet corresponding to the core sheets;
a reciprocating drive portion that reciprocates the adhesive applicator relative to the steel sheet to switch whether or not the adhesive is applied by the adhesive applicator; and
a buffer member that allows displacement of the adhesive applicator in the reciprocating direction,
wherein:
the adhesive applicator comprises a discharge portion to which a passage through which the adhesive passes is provided and which is configured to discharge the adhesive from a tip of the passage,
when the application of the adhesive is performed, the adhesive applicator is disposed such that the adhesive discharged from a tip of the discharge portion is brought into contact with the steel sheet in response to an up and down movement of the steel sheet accompanying the forming of the core sheets by punching from the steel sheet, and
the buffer member is configured to adjust a contact pressure of the tip against the steel sheet.

2. The manufacturing device for a laminated core according to claim 1, wherein the adhesive applicator further comprises a holding portion that holds the discharge portion, and the discharge portion is provided so as to protrude from an end face of the holding portion.

3. The manufacturing device for a laminated core according to claim 1, further comprising a punching portion that punches out the core sheets from the steel sheet, the punching portion comprising a die comprising an upper die and a lower die,
wherein the adhesive applicator is housed in a through hole penetrating between an inner surface and an outer surface of the upper die or the lower die, the inner surface and the outer surface being surfaces of the upper die or the lower die spaced apart in an up and down direction, the inner surface being a surface facing the steel sheet, and
wherein an end of the through hole on the inner surface side comprises at least one positioning protrusion protruding inward in a radial direction of the through hole, and a position of the adhesive applicator on the inner surface side is determined by the positioning protrusion.

4. The manufacturing device for a laminated core according to claim 3, wherein the buffer member is disposed between the adhesive applicator and the positioning protrusion.

5. The manufacturing device for a laminated core according to claim 1, wherein the reciprocating drive portion is a hydraulic cylinder comprising a fixed body and a rod provided so as to be reciprocable relative to the fixed body.

6. The manufacturing device for a laminated core according to claim 5, wherein the buffer member is disposed between the rod and the adhesive applicator, or between a mounting table fixed to the rod and the fixed body.

7. The manufacturing device for a laminated core according to claim 1, wherein the reciprocating drive portion is a slide cam mechanism comprising a first cam member provided so as to be slidable in a horizontal direction and a second cam member driven in an up and down direction in response to the sliding of the first cam member.

8. The manufacturing device for a laminated core according to claim 7, wherein the buffer member is disposed between the second cam member and the adhesive applicator.

9. The manufacturing device for a laminated core according to claim 7, further comprising a punching portion that punches out the core sheets from the steel sheet, the punching portion comprising a die comprising an upper die and a lower die,
wherein the first cam member and the second cam member are disposed within the upper die or the lower die.

10. A manufacturing device for a laminated core in which core sheets having a predetermined shape are formed by punching from a steel sheet and a predetermined number of core sheets are laminated and bonded, the manufacturing device comprises:
an adhesive applicator that applies an adhesive to portions of the steel sheet corresponding to the core sheets;
a reciprocating drive portion that reciprocates the adhesive applicator relative to the steel sheet to switch whether or not the adhesive is applied by the adhesive applicator; and
a buffer member that allows displacement of the adhesive applicator in the reciprocating direction,
wherein:
the adhesive applicator comprises a discharge portion to which a passage through which the adhesive passes is provided and which is configured to discharge the adhesive from a tip of the passage,
when the application of the adhesive is performed, the adhesive applicator is disposed such that the adhesive discharged from a tip of the discharge portion is brought into contact with the steel sheet in response to an up and down movement of the steel sheet accompanying the forming of the core sheets by punching from the steel sheet, and
the adhesive applicator further comprises a holding portion that holds the discharge portion, and the discharge portion is provided so as to protrude from an end face of the holding portion.

11. A manufacturing method for a laminated core, the method comprising manufacturing the laminated core using the manufacturing device according to any one of claims 1 to 10.
